# EUROPEAN PATENT SPECIFICATION

(11) **EP 3 050 748 B1**
(45) Date of publication and mention of the grant of the patent: **11.07.2018**
(21) Application number: 16153614.9
(22) Date of filing: 01.02.2016
(51) Int. Cl.: B60N 3/10, A47G 23/02

(54) **APPARATUS FOR ACCOMODATING BEVERAGE FOR VEHICLE**
VORRICHTUNG ZUR AUFNAHME VON GETRÄNKEN FÜR EIN FAHRZEUG
APPAREIL POUR RECEVOIR UNE BOISSON POUR VÉHICULE

(30) Priority: 02.02.2015 KR 20150015972
(43) Date of publication of application: 03.08.2016
(73) Proprietor: LG Innotek Co., Ltd., Seoul, 04637 (KR)
(72) Inventor: WON, Boone, 04637 Seoul (KR); SONG, Young Kil, 04637 Seoul (KR); SHIN, Jong Bae, 04637 Seoul (KR); CHO, Yong Sang, 04637 Seoul (KR)
(74) Representative: Zardi, Marco

(56) References cited:
- JP-A- 2002 147 918
- US-A- 4 823 554
- US-A1- 2009 038 317
- US-A1- 2010 163 090
- US-A1- 2012 217 772

## Description

### BACKGROUND

### 1. Field of the Invention

The present invention relates to equipment for accommodating a beverage for a vehicle capable of performing cooling and heating operations.

### 2. Discussion of Related Art

Since a conventional cup holder for a vehicle serves to fix a cup so as to prevent contents in the cup from spilling into the vehicle due to movement of the vehicle, the conventional cup holder for a vehicle has a problem that the contents in the cup or a can cannot be cooled or heated and drunk. In order to solve this problem of the conventional cup holder for a vehicle, a cup holder capable of performing cooling and heating operations has been developed. However, in the conventional cup holder for a vehicle, a driver is unable to easily control a temperature inside the cup holder to various temperatures, and a cooling mode and a heating mode cannot be simultaneously executed.

Thus, a cup holder using a thermoelectric module for a vehicle has been developed. However, a conventional cup holder using a thermoelectric module for a vehicle has a built-in structure formed when the vehicle is manufactured, is not easily attached to or detached from the inside of the vehicle, and has to be adopted as an option when the vehicle is purchased. That is, only some models of vehicles introduce the cup holder using the thermoelectric module as an option, and thus usage is decreased.

In addition, even when this option is added to the vehicle, the conventional external cup holder using a thermoelectric module for a vehicle is bulky, and thus has a problem in that it requires a large space when the cup holder is being used in the vehicle and has a safety problem that the cup holder may fall over.

Further examples of apparatuses for accommodating beverages according to the prior art are known from each of US 2009/038317, US 2012/217772, US 4823554 and JP 2002147918

### SUMMARY OF THE INVENTION

The present invention is directed to an apparatus for accommodating a beverage for a vehicle capable of providing a cup holder for a vehicle having an improved structure capable of being detachably attached to places at a cup holder provided in the vehicle so that the convenience of use can be improved, and at the same time may combine frames having various sizes to change an insertion diameter of the cup holder to allow the apparatus to be easily mounted in a conventional cup holder for a vehicle so that the apparatus is capable of being applied to various kinds of vehicles.

According to an aspect of the present invention, there is provided an apparatus for accommodating a beverage for a vehicle, the apparatus includes: a first housing including a container accommodation portion and accommodating a thermoelectric module that applies a thermal conversion effect to an outer circumferential surface of the container accommodation portion; and a second housing coupled to a lower portion of the first housing and having a second diameter smaller than a first diameter of the first housing. The first housing includes a plurality of second housing coupling grooves formed in a bottom surface of the first housing and corresponding to the diameter of the second housing.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a front view of an apparatus for accommodating a beverage for a vehicle according to an embodiment of the present invention, FIG. 2 is a cross-sectional view taken along line of FIG. 1, and FIG. 3 is a view illustrating a general structure of a thermoelectric module according to the embodiment of the present invention described above in the structure of FIG. 2; and
FIGS. 4A through 4C and FIGS. 5A through 5D are conceptual views for explaining structures of thermoelectric modules according to other embodiments of the present invention.

### DETAILED DESCRIPTION OF EXEMPLARY EMBODIMENTS

A configuration and an operation according to the present invention will be described in detail below with reference to the accompanying drawings. Like reference numerals are used for like elements regardless of reference numerals of the drawings, and a redundant description thereof will be omitted. It should be understood that although the terms "first", "second", etc. may be used herein to describe various components, these components should not be limited by these terms. These components are only used to distinguish one component from another.

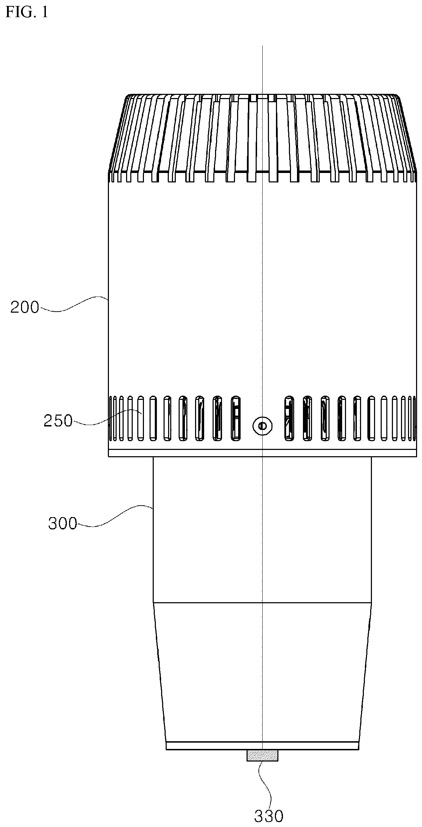

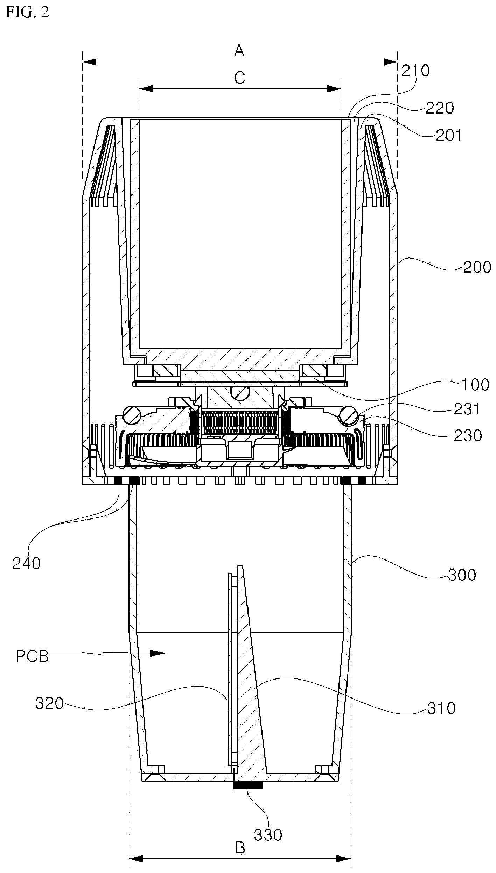

FIG. 1 is a front view of an apparatus for accommodating a beverage for a vehicle according to an embodiment of the present invention, and FIG. 2 is a cross-sectional view taken along line of FIG. 1.

Referring to FIGS. 1 and 2, the apparatus for accommodating a beverage for a vehicle according to the embodiment of the present invention includes a container accommodation portion 210, a first housing 200 that accommodates a thermoelectric module 100 for applying a thermal conversion effect to an outer circumferential surface of the container accommodation portion 210, and a second housing 300 that is coupled to a lower portion of the first housing 200 and has a second diameter B smaller than a first diameter A of the first housing 200. The first housing 200 may include a plurality of second housing coupling grooves 240 that are formed in a bottom surface of the first housing 200 and correspond to a diameter of the second housing 300. Thus, the entire exterior of the apparatus for accommodating the beverage for the vehicle according to the embodiment of the present invention is formed in such a way that the first housing 200 and the second housing 300 are coupled to each other in a vertical direction, and a container (a cup) for storing a beverage is inserted into an upper portion of the first housing 200, and a lower portion of the second housing 300 is easily inserted into mounting grooves (holes of a conventional cup holder) provided in the vehicle. Because various designs and sizes may be selected according to the diameter of the second housing 300 so that the second housing 300 is coupled to the first housing 200, an attachable beverage accommodation container capable of controlling temperature can be widely used.

In detail, referring to FIGS. 1 and 2, an outer circumferential surface of the first housing 200 may be implemented in a cylindrical shape, like in a structure illustrated in FIGS. 1 and 2, and the first housing 200 may include the container accommodation portion 210. The exterior of the first housing 200 may be modified in various shapes including the cylindrical shape. The container accommodation portion 210 is implemented in a shape of a concave groove, like in the structure illustrated in FIG. 2, and has an open upper portion. In addition, upper and lower portions of the beverage accommodation portion 210 have a uniform diameter C. However, embodiments of the present invention are not limited thereto, and a width of the upper portion of the container accommodation portion 210 may be larger than a width of the lower portion of the container accommodation portion 210 so that the container accommodation portion 210 is mounted in various ways according to the design of a cup. In addition, the apparatus for accommodating a beverage for a vehicle may be formed to have a separable structure so that the shape of the container accommodation portion 210 accommodated in the first housing 200 is modified in various ways.

The container accommodation portion 210 has a hollow structure, like in the structure of FIG. 2, and may be formed of a metal material having high thermal conductivity or a conductive resin material. In particular, a bottom surface of the container accommodation portion 210 may be formed adjacent to a heating portion or a heat absorption portion of the thermoelectric module 100, which will be described later, so that a thermal conversion effect is directly transferred to the container accommodation portion 210. In one example, the bottom surface of the container accommodation portion 210 may be formed in direct contact with a substrate surface of the heating portion or the heat absorption portion of the thermoelectric module 100. That is, even when the shape of the outer circumferential surface of the container accommodation portion 210 is modified in various ways, the bottom surface of the container accommodation portion 210 may be formed so that heat is transferred to the bottom surface of the container accommodation portion 210. To this end, the container accommodation portion 210 and an accommodation portion 201 of the first housing 200 may be implemented to have diameters that do not exactly correspond to each other, but are spaced apart from each other to a certain extent.

In addition, the apparatus for accommodating a beverage for a vehicle according to the embodiment of the present invention may further include a circulation control module 230 that is accommodated in the first housing 200 and controls thermoelectric efficiency by injecting outside air into a heating surface or a heat absorption surface of the thermoelectric module 100. The circulation control module 230 is implemented to control a rise and a fall of temperature generated in the heating portion or the heat absorption portion of the thermoelectric module 100 by applying a flow of air into an inner space of the first housing 200 so that thermoelectric efficiency is improved. That is, the thermoelectric module 100 having a uniform thermoelectric efficiency ΔT applies cold air that serves to decrease the temperature of the heating portion so as to maintain a uniform temperature to further decrease the temperature of the heat absorption portion so that cooling efficiency is improved or heating efficiency is improved while working in the opposite way. To this end, the circulation control module 230 according to the present invention may include a fan unit 231 that allows the flow of air and a control module for controlling an amount of air-flow or temperature of the fan unit 231.

In addition, the second housing 300 may be implemented to have a structure coupled to the bottom surface of the first housing 200 and to have a shape of a cylindrical circumference through which the second housing 300 is inserted into an insertion hole of a conventional cup holder for a vehicle. In this case, the second housing 300 may be implemented to have a diameter that tapers toward the lower portion of the second housing 300 and to be easily inserted into insertion holes having various sizes. In particular, a diameter of the upper portion of the second housing 300 according to the embodiment of the present invention may be equal to or less than a diameter of the lower portion of the first housing 200. In particular, a plurality of second housing coupling grooves 240 that correspond to a width (a diameter) of the upper portion of the second housing 300 are provided in the bottom surface of the first housing 200 so that second housings 300 having various sizes may be coupled to the first housing 200.

In addition, the second housing 300 further includes a switching member 330 having a structure of a dome switch that protrudes from a bottom surface of the second housing 300. The switching member 330 is configured to be electrically connected to a printed circuit board (PCB) 330 including a control circuit of the thermoelectric module 100 embedded in the second housing 300, and when the second housing 300 is mounted in the apparatus for accommodating a beverage for a vehicle, the switching member 330 is naturally pressed so that the thermoelectric module 100 may be operated. In addition, the PCB 330 is mounted on a mounting portion 310 mounted in the second housing 300 so that spatial utility is improved. In this case, like in the structure of FIG. 2 that is not a general horizontal arrangement, the mounting portion 310 may be mounted to be perpendicular to the bottom surface of the second housing 300, or the second housing 300 may be formed to be inclined having a uniform inclination. When the second housing 300 is implemented in an inclined arrangement structure, the height of the second housing 300 is further reduced so that the size of the entire equipment can be remarkably reduced.

In addition, the first housing 200 according to the embodiment of the present invention includes a communication hole 250 that communicates with an inner space of the first housing 200 to allow circulation of air so that thermoelectric efficiency is improved.

Furthermore, in the structure of FIG. 2, the container accommodation portion 210 may be implemented using a material having high thermal conductivity so that heat is easily transferred to the container accommodation portion 210 by accumulating cold air and warm air, and may serve as a kind of heat sink. The container accommodation portion 210 and the above-described circulation control module 230 may be implemented as a detachable structure.

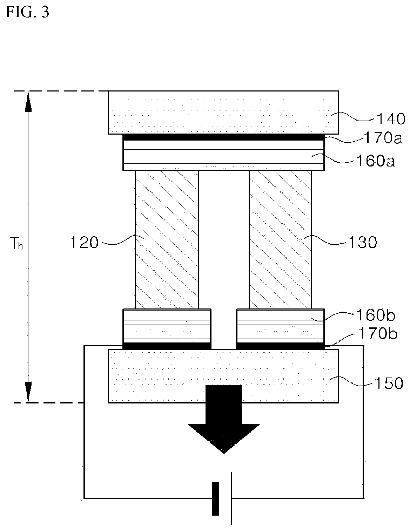

FIG. 3 is a view illustrating a general structure of the thermoelectric module 100 according to the embodiment of the present invention described above in the structure of FIG. 2.

The thermoelectric module 100 including a thermoelectric semiconductor element (hereinafter, referred to as a 'thermoelectric element') according to the embodiment of the present invention may be formed to have a structure including at least one unit cell including a first substrate 140 and a second substrate 150 that face each other, a first semiconductor element 120 disposed between the first substrate 140 and the second substrate 150, and a second semiconductor element 130 disposed between the first substrate 140 and the second substrate 150 and electrically connected to the first semiconductor element 120. In this case, in a thermoelectric module for cooling, the first substrate 140 and the second substrate 150 may be ordinary insulating substrates, for example, alumina substrates. Alternatively, in the embodiment of the present invention, heat dissipation efficiency and small thickness may be implemented using metal substrates. In the structure of FIG. 2, the first substrate 140, the second substrate 150, and the container accommodation portion 210 may be disposed so that their surfaces are in contact with each other.

In addition, when the above-described first substrate 140 and the second substrate 150 are formed using metal substrates, as illustrated in FIG. 3, dielectric layers 170a and 170b may be further formed between electrode layers 160a and 160b formed on the first substrate 140 and the second substrate 150, respectively. Copper (Cu) or a Cu alloy may be used for the metal substrates, and the metal substrates may be formed at a small thickness of 0.1 mm to 0.5 mm. In this case, when the thickness of the metal substrate is smaller than 0.1 mm or exceeds 0.5 mm, a heat dissipation characteristic is excessively high or thermal conductivity is very high and that causes the reliability of the thermoelectric module 100 to be greatly lowered.

In addition, the dielectric layers 170a and 170b may be formed using dielectric materials having high heat dissipation performance, i.e., materials having a thickness of 0.01 mm to 0.15 mm and a thermal conductivity of 5 to 10 W/K in consideration of a thermal conductivity of the thermoelectric module for cooling. In this case, when the thickness of each of the dielectric layers 170a and 170b is less than 0.01 mm, insulating efficiency (or withstand voltage characteristic) is greatly lowered, and when the thickness of each of the dielectric layers 170a and 170b exceeds 0.15 mm, thermal conductivity is lowered so that heat dissipation efficiency is lowered.

The electrode layers 160a and 160b electrically connect the first semiconductor element 120 and the second semiconductor element 130 using electrode materials, such as Cu, silver (Ag), and nickel (Ni). A thickness of each of the electrode layers 160a and 160b may be in the range of 0.01 mm to 0.3 mm. When the thickness of each of the electrode layers 160a and 160b is less than 0.01 mm, functions as electrodes are lowered, and thus electric conductivity is lowered, and even when the thickness of each of the electrode layers 160a and 160b exceeds 0.3 mm, conductivity efficiency is lowered due to an increase in resistance.

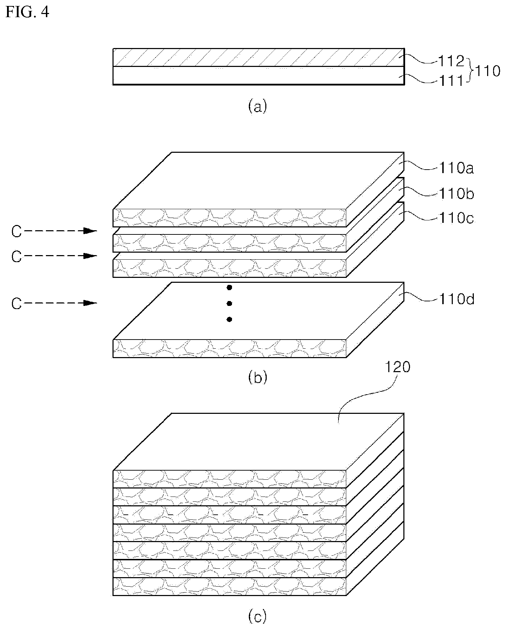

In the thermoelectric module 100 according to the embodiment of the present invention, when the thermoelectric element having the structure of FIG. 3 is formed to have a stacked sheet type structure, as will be illustrated in FIG. 4, it may be implemented with a slimmer structure so that a beverage storing container is made slimmer. Referring to FIGS. 4A through 4C, basically, a unit thermoelectric element according to the embodiment of the present invention may be implemented with a structure having a multi-layer stack, unlike in a bulky manufacturing process. In a process of manufacturing the unit thermoelectric element, a material including a material formed of a semiconductor material is manufactured in a form of a paste, and the paste is applied onto a base material 111, such as a sheet or a film, so as to form a semiconductor layer 112 and to form one unit member 110. In the unit member 110, a plurality of unit members 100a, 100b, and 100c are stacked to form a stacked structure, as illustrated in FIG. 2, and subsequently, the stacked structure is cut to form a unit element 120. That is, the unit element 120 according to the present invention may be formed as a structure in which a plurality of unit members 110 formed by stacking semiconductor layers 112 on the base material 111 are stacked.

A process of applying a semiconductor paste onto the base material 111 of the above-described process may be implemented using various methods. In one example, the process may be implemented using tape casting, i.e., a method, whereby a slurry is manufactured by mixing a very fine semiconductor material powder with one selected from the group consisting of an aqueous or non-aqueous solvent, a binder, a plasticizer, a dispersant, a defoamer, and a surfactant, and then the slurry is formed on a moving blade or a moving transportation base material to a uniform thickness according to a purpose. In this case, the thickness of the base material may be the thickness of a material, such as a film or a sheet, in the range of 10 um to 100 um, and the applied semiconductor material may be a P-type semiconductor material or an N-type semiconductor material. The N-type semiconductor material may be formed using a mixture of a bismuth telluride (BiTe)-based main raw material including selenium (Se), nickel (Ni), aluminum (Al), copper (Cu), silver (Ag), lead (Pb), boron (B), gallium (Ga), tellurium (Te), bismuth (Bi), or indium (In), and Bi or Te that is used in an amount of 0.001 to 1.0 parts by weight, based on 100 parts by weight of the main raw material. For example, the N-type semiconductor material may be formed using a mixture of a Bi-Se-Te material as the main raw material and Bi or Te that is used in an amount of 0.001 to 1.0 parts by weight, based on 100 parts by weight of Bi-Se-Te. That is, when 100g of Bi-Se-Te is added to the main raw material, Bi or Te to be additionally mixed may be in the range of 0.001 to 1.0 g. As described above, the weight range of a material to be added to the main raw material has meaning in that, when the material is out of the range of 0.001 to 1.0 parts by weight, based on 100 parts by weight of the material, thermal conductivity is not lowered and electric conductivity is lowered and improvements in a ZT value cannot be expected.

The P-type semiconductor material may be formed using a mixture of a BiTe-based main raw material including antimony (Sb), nickel (Ni), aluminum (Al), copper (Cu), silver (Ag), lead (Pb), boron (B), gallium (Ga), tellurium (Te), bismuth (Bi), or indium (In), and Bi or Te that is used in an amount of 0.001 to 1.0 parts by weight, based on 100 parts by weight of the main raw material. For example, the P-type semiconductor material may be formed using a mixture of a Bi-Sb-Te as the main raw material and Bi or Te that is used in an amount of 0.001 to 1.0 parts by weight, based on 100 parts by weight of Bi-Sb-Te. That is, when the weight of Bi-Sb-Te is added to the main raw material, Bi or Te to be additionally mixed may be in the range of 0.001 to 1.0 g. The weight range of the above-described material to be added to the main raw material has meaning in that, when the material is out of the range of 0.001 to 1.0 parts by weight, based on 100 parts by weight of the material, thermal conductivity is not lowered and electric conductivity is lowered and improvements in a ZT value cannot be expected.

In addition, in a process of aligning the unit members 110 in a multi-layer shape and stacking the unit members 110, the unit members 110 may be pressed at a temperature of 50□ to 250□ and may be formed in a stacked structure. In the embodiment of the present invention, the number of stacks of the unit members 110 may be in the range of 2 to 50. Subsequently, a cutting process may be performed in a desired shape and size, and a sintering process may be added.

The unit element 120 formed by stacking a plurality of unit members 110 manufactured in the above-described process may obtain a uniformity of thickness, shape, and size. That is, in a conventional bulky thermoelectric module, after ingot grinding and refining ball-mill process are performed, a sintered bulk structure is cut. Thus, it should be obvious that there are many materials damaged in the cutting process, and it is difficult to cut the conventional bulky thermoelectric module to a uniform thickness. In addition, the conventional bulky thermoelectric module has a large thickness of about 3 mm to 5 mm, and thus it is difficult to make a slim thermoelectric module. However, in the unit element 120 having the stacked structure according to the embodiment of the present invention, after sheet-shaped unit members are stacked in a multi-layer structure, a sheet stacked structure is cut. Thus, there is hardly any loss of a material, and the material has a uniform thickness. Thus, uniformity of the material can be obtained, the thickness of the entire unit element is equal to or less than 1.5 mm, and the entire unit element is able to be made slim and may be applied in various shapes.

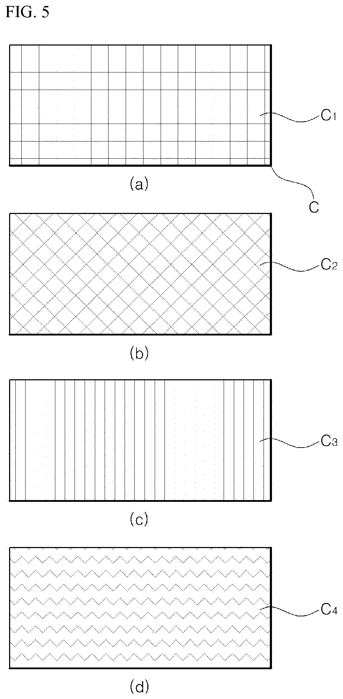

In particular, the process of manufacturing the unit element according to the embodiment of the present invention may be implemented by additionally performing a process of forming a conductive layer on a surface of each unit member 110 while a process of forming a stacked layer of the unit member 110 is performed. That is, the conductive layer having the structure of FIG. 5 may be formed between unit members of the stacked structure of FIG. 4C. The conductive layer may be formed on an opposite surface to a base material surface on which a semiconductor layer is formed. In this case, the conductive layer may be configured as a patterned layer so that a region in which a surface of the unit member is exposed is formed. Thus, electric conductivity can be improved when compared with a case where the conductive layer is formed on the entire surface of the unit member, and adhesion between unit members can be improved, and at the same time thermal conductivity can be lowered.

That is, FIGS. 5A through 5D illustrate various modified examples of a conductive layer C according to other embodiments of the present invention. Patterns through which the surface of the unit member is exposed may be modified in various shapes including a mesh type structure including closed aperture patterns C₁ and C₂, as illustrated in FIGS. 5A and 5B, or a line type structure including open aperture patterns C₃ and C₄, as illustrated in FIGS. 5C and 5D. The above conductive layers allow adhesion between unit members inside a unit element formed to have a stacked structure of unit members to be improved, thermal conductivity between unit members to be lowered, and electric conductivity to be improved. In addition, a cooling capacity Qc and ΔT(□) are improved when compared with the conventional bulky thermoelectric element, and in particular, a power factor is improved by 1.5 times, i.e., electric conductivity is improved by 1.5 times. Improvements in electric conductivity are directly connected to improvements in thermoelectric efficiency so that cooling efficiency is increased.

The conductive layer may be formed of a metal material, and all electrode materials based on metals, such as Cu, Ag, and Ni, may be used to form the conductive layer.

When the thermoelectric element having the structure of FIGS. 4A through 4C or FIGS. 5A through 5D is applied to the apparatus for accommodating a beverage for a vehicle according to an embodiment of the present invention, thermoelectric efficiency can be improved, and at the same time a degree of freedom of design in which the size of the entire apparatus can be easily reduced or increased to a desired size can be obtained.

The apparatus for accommodating a beverage for a vehicle according to the embodiment of the present invention can be driven in the following way.

First, referring to FIGS. 1 and 2, a user inserts a beverage container into the first housing 200 of the apparatus for accommodating a beverage for a vehicle. As described above, the container accommodation portion 210 for storing the beverage is disposed in the first housing 200, and a beverage container, such as a can or a cup, can be inserted into the container accommodation portion 210.

Next, a pressing force applied when the beverage container is inserted into the container accommodation portion 210 is transferred to the first housing 200, and an external force is applied to one surface of the first housing 200 and presses the above-described switching member 330. Due to the pressed switching member 330, the circulation control module 230 applies power to the above-described thermoelectric module. When power is applied to the thermoelectric module, the power is used to operate the thermoelectric semiconductor coupled to the apparatus for accommodating a beverage for a vehicle, and a heating source or a cooling source generated in the thermoelectric semiconductor is transferred to the first housing 200. Furthermore, the heating source or the cooling source transferred to the first housing 200 is transferred to the beverage container. Thus, a thermal conversion effect that heats or cools the beverage container can be realized.

In addition, when power is applied to the thermoelectric module due to the pressed switching member 330, the circulation control module 230 operates so that the fan unit 231 operates simultaneously. The fan unit 231 allows the flow of inside air and further increases heat transfer efficiency. In particular, when the cooling source is transferred to the beverage container, an operation effect in which cooling efficiency can be supplemented, is increased. Alternatively, the amount of air-flow of the fan unit 231 or a temperature of wind can be controlled by driving the circulation control module 230 so that the effect of cooling or heating can be realized.

As described above, according to an embodiment of the present invention, an apparatus for accommodating a beverage for a vehicle provides a cup holder for a vehicle having an improved structure capable of being detachably attached to places at a cup holder provided in the vehicle so that the convenience of use can be improved, and at the same time may combine frames having various sizes to change an insertion diameter of the cup holder to allow the apparatus to be easily mounted in a conventional cup holder for a vehicle so that the apparatus can be applied to various kinds of vehicles.

In addition, according to an embodiment of the present invention, a thermoelectric module for heating a container accommodation portion or absorbing heat from the container accommodation portion is implemented to have a sheet type stacked structure so that thermal conductivity can be lowered, electrical conductivity can be improved, a cooling capacity Qc and a temperature change rate ΔT can be remarkably improved, and a cup holder having a slimmer structure can be implemented, and thus spatial efficiency can be improved.

Specifically, a conductive pattern layer is included between unit members having a stacked structure so that electrical conductivity can be maximized, and the thickness of a thermoelectric module according to the embodiment of the present invention is remarkably reduced when compared with the thickness of a conventional bulky thermoelectric module so that spatial utility can be maximized.

## Claims

1. An apparatus for accommodating a beverage for a vehicle, the apparatus comprising:
a first housing(200) comprising a container accommodation portion(210) and a thermoelectric module(100) that applies a thermal conversion effect to an outer circumferential surface of the container accommodation portion(210); and
a second housing(300) coupled to a lower portion of the first housing(200) and having a second diameter smaller than a first diameter of the first housing(200),
**characterized in that**, the first housing(200) comprises a plurality of second housing coupling grooves(240) formed in a bottom surface of the first housing(200) and corresponding to the diameter of the second housing(300).

2. The apparatus of claim 1, further comprising a circulation control module(230) accommodated in the first housing(200) and controlling thermoelectric efficiency by injecting outside air into a heating surface or a heat absorption surface of the thermoelectric module(100).

3. The apparatus of claim 2, wherein the circulation control module(230) comprises a fan unit(231).

4. The apparatus of claim 2, further comprising a printed circuit board comprising a control circuit accommodated in the second housing(300) and controlling a driving of the thermoelectric module(100) or the circulation control module(230).

5. The apparatus of claim 4, further comprising a switching member(330) electrically connected to the printed circuit board and protruding from a bottom surface of the second housing (300).

6. The apparatus of claim 5, wherein the first housing(200) comprises a communication hole(250) that communicates with an inner space of the first housing(200).

7. The apparatus of claim 4, further comprising a mounting portion(310) for mounting the printed circuit board extending in an upward direction from a bottom surface of the second housing(300).

8. The apparatus of claim 7, wherein the mounting portion(310) forms an incline with the bottom surface of the second housing(300).

9. The apparatus of claim 1, wherein the thermoelectric module(100) comprises a unit thermoelectric element having a stacked structure of two or more unit members, which have thermoelectric semiconductor layers disposed on base materials thereof.

10. The apparatus of claim 9, wherein the unit thermoelectric element further comprises a conductive layer between adjacent unit members.

11. The apparatus of claim 10, wherein the conductive layer has a patterned structure in which a surface of the base material is exposed.

12. The apparatus of claim 1, wherein at least one of a first substrate(140) and a second substrate(150) of the thermoelectric element(100) contacts with a surface of the container accommodation portion(210).

## Patentansprüche

1. Vorrichtung zum Aufnehmen eines Getränks für ein Fahrzeug, wobei die Vorrichtung umfasst:
ein erstes Gehäuse (200) umfassend einen Behälteraufnahmeabschnitt (210) und ein thermoelektrisches Modul (100), das eine thermische Umwandlungswirkung auf eine äußere Umfangsoberfläche des Behälteraufnahmeabschnitts (210) ausübt; und
ein zweites Gehäuse (300), das mit einem unteren Abschnitt des ersten Gehäuses (200) gekoppelt ist und einen zweiten Durchmesser aufweist, der kleiner als ein erster Durchmesser des ersten Gehäuses (200) ist,
**dadurch gekennzeichnet, dass** das erste Gehäuse (200) eine Vielzahl von Kupplungsnuten (240) für das zweite Gehäuse umfasst, die in einer unteren Oberfläche des ersten Gehäuses (200) gebildet sind und dem Durchmesser des zweiten Gehäuses (300) entsprechen.

2. Vorrichtung nach Anspruch 1, ferner umfassend ein Zirkulationssteuerungsmodul (230), das in dem ersten Gehäuse (200) aufgenommen ist und die thermoelektrische Effizienz durch Injizieren von Außenluft in eine Heizoberfläche oder eine Wärmeabsorptionsoberfläche des thermoelektrischen Moduls (100) steuert.

3. Vorrichtung nach Anspruch 2, wobei das Zirkulationssteuerungsmodul (230) eine Gebläseeinheit (231) umfasst.

4. Vorrichtung nach Anspruch 2, ferner umfassend eine Leiterplatte, die eine Steuerschaltung umfasst, die in dem zweiten Gehäuse (300) aufgenommen ist und ein Antreiben des thermoelektrischen Moduls (100) oder des Zirkulationssteuerungsmoduls (230) steuert.

5. Vorrichtung nach Anspruch 4, ferner umfassend ein Umschaltelement (330), das mit der Leiterplatte elektrisch verbunden ist und von einer unteren Oberfläche des zweiten Gehäuses (300) vorsteht.

6. Vorrichtung nach Anspruch 5, wobei das erste Gehäuse (200) ein Verbindungsloch (250) umfasst, das mit einem Innenraum des ersten Gehäuses (200) in Verbindung steht.

7. Vorrichtung nach Anspruch 4, ferner umfassend einen Montageabschnitt (310) zum Montieren der Leiterplatte, der sich von einer unteren Oberfläche des zweiten Gehäuses (300) in einer Aufwärtsrichtung erstreckt.

8. Vorrichtung nach Anspruch 7, wobei der Montageabschnitt (310) mit der unteren Oberfläche des zweiten Gehäuses (300) eine Neigung bildet.

9. Vorrichtung nach Anspruch 1, wobei das thermoelektrische Modul (100) ein einheitliches thermoelektrisches Element umfasst, das eine gestapelte Struktur von zwei oder mehr Einheitselementen aufweist, die thermoelektrische Halbleiterschichten aufweisen, die auf Basismaterialien von diesen angeordnet sind.

10. Vorrichtung nach Anspruch 9, wobei das einheitliche thermoelektrische Element ferner eine leitende Schicht zwischen angrenzenden Einheitselementen umfasst.

11. Vorrichtung nach Anspruch 10, wobei die leitende Schicht eine gemusterte Struktur aufweist, in der eine Oberfläche des Basismaterials freigelegt ist.

12. Vorrichtung nach Anspruch 1, wobei ein erstes Substrat (140) und/oder ein zweites Substrat (150) des thermoelektrischen Elements (100) mit einer Oberfläche des Behälteraufnahmeabschnitts (210) in Kontakt ist.

## Revendications

1. Un appareil pour recevoir une boisson pour un véhicule, l'appareil comprenant :
un premier boîtier (200) comprenant une partie (210) de réception de conteneur et un module thermoélectrique (100) qui applique un effet de conversion thermique à une surface circonférentielle extérieure de la partie (210) de réception de conteneur ; et
un deuxième boîtier (300) relié à une partie inférieure du premier boîtier (200) et ayant un deuxième diamètre inférieur à un premier diamètre du premier boîtier (200),
**caractérisé en ce que** le premier boîtier (200) comprend une pluralité de deuxièmes rainures (240) de liaison de boîtier formées dans une surface inférieure du premier boîtier (200) et correspondant au diamètre du deuxième boîtier (300).

2. L'appareil selon la revendication 1, comprenant en outre un module (230) de commande de circulation logé dans le premier boîtier (200) et commandant l'efficience thermoélectrique en injectant de l'air extérieur dans une surface chauffante ou une surface d'absorption de chaleur du module thermoélectrique (100).

3. L'appareil selon la revendication 2, dans lequel le module (230) de commande de circulation comprend une unité à ventilateur (231).

4. L'appareil selon la revendication 2, comprenant en outre une carte à circuit imprimé comprenant un circuit de commande logée dans le deuxième boîtier (300) et commandant une commande du module thermoélectrique (100) ou du module (230) de commande de circulation.

5. L'appareil selon la revendication 4, comprenant en outre un organe de commutation (330) connecté électriquement à la carte à circuit imprimé et faisant saillie depuis une surface inférieure du deuxième boîtier (300).

6. L'appareil selon la revendication 5, dans lequel le premier boîtier (200) comprend un trou de communication (250) qui communique avec un espace interne du premier boîtier (200).

7. L'appareil selon la revendication 4, comprenant en outre une partie de montage (310) pour monter la carte à circuit imprimé s'étendant dans une direction orientée vers le haut à partir d'une surface inférieure du deuxième boîtier (300).

8. L'appareil selon la revendication 7, dans lequel la partie de montage (310) forme une surface inclinée avec la surface inférieure du deuxième boîtier (300).

9. L'appareil selon la revendication 1, dans lequel le module thermoélectrique (100) comprend un élément thermoélectrique unitaire ayant une structure formée par l'empilement de deux ou plusieurs éléments unitaires, qui ont des couches semi-conductrices thermoélectriques disposées sur des matériaux de base de celles-ci.

10. L'appareil selon la revendication 9, dans lequel l'élément thermoélectrique unitaire comprend en outre une couche conductrice entre des éléments unitaires adjacents.

11. L'appareil selon la revendication 10, dans lequel la couche conductrice a une structure à motifs dans laquelle une surface du matériau de base est exposée.

12. L'appareil selon la revendication 1, dans lequel au moins un parmi un premier substrat (140) et d'un deuxième substrat (150) de l'élément thermoélectrique (100) est en contact avec une surface de la partie (210) de réception de conteneur.
